# EUROPÄISCHE PATENTANMELDUNG

(11) **EP 0 812 048 A2**
(43) Veröffentlichungstag der Anmeldung: **10.12.1997**
(21) Anmeldenummer: 97108918.0
(22) Anmeldetag: 03.06.1997
(51) Int. Cl.: H02H 3/33

(54) **Fehlerstromschutzschalter**

(30) Priorität: 04.06.1996 DE 19622409
(71) Anmelder: HEINRICH KOPP AG, D-63796 Kahl (DE)
(72) Erfinder: Thiele, Stefan, Dipl.-Ing., 63796 Kahl (DE)
(74) Vertreter: Reinhard - Skuhra - Weise & Partner

(57) **Zusammenfassung**

Ein Fehlerstromschutzschalter mit einem Summenstromwandler zur Erfassung von Fehlerströmen auf Stromversorgungsleitungen weist ein Auslöserelais auf, durch welches in die Stromversorgungsleitungen geschaltete Schalter betätigbar sind.
Es ist ein Schwingkreis vorgesehen, der die Sekundärspule des Summenstromwandlers enthält, sowie ein Entdämpfungsschaltkreis zur Entdämpfung des Schwingkreises und zur Abgabe eines Meßsignals, ferner ein Frequenz/Spannungswandler zur Umwandlung des Meßsignals in einen Spannungswert, und eine Logikschaltung zur Ansteuerung des Auslöserelais.

## Beschreibung

Die Erfindung betrifft einen Fehlerstromschutzschalter gemäß dem Oberbegriff des Patentanspruchs 1.

Ein Fehlerstromschutzschalter entsprechend dem Oberbegriff des Patentanspruchs 1 ist aus der DE 43 40 737 A1 bekannt. Dieser Fehlerstromschutzschalter dient insbesondere zur Isolationsüberwachung elektrischer Stromkreise. Der Summenstromwandler weist eine aus Phasenleiter und neutralem Leiter gebildete Primärwicklung und eine Sekundärwicklung auf. Die Sekundärwicklung steuert über einen Verstärker und eine Grenzwertschaltung ein auf Schalter einwirkendes Relais. Zwischen der Grenzwertschaltung und dem Relais ist eine Schaltstufe vorgesehen, die mit einem Spannungsspeisekreis verbunden ist, so daß ein Widerstand an das durch Phasenleiter und Neutralleiter bestehende Netz angeschlossen ist. Ein ständig durch die Primärwicklung fließender Fehlerstrom wird erzeugt, wodurch in der Sekundärwicklung ein niederfrequentes Signal hervorgerufen wird, das die Schaltstufe schwingen läßt. Dieser Fehlerstromschutzschalter führt eine fortdauernde Selbstüberwachung mittels eines ständig fließenden Fehlerstromes durch, wobei die Elektronik des Fehlerstromschutzschalters derart überwacht wird, daß bei einem Defekt eines Bauteils durch die Grenzwertschaltung und die Schaltstufe das den Schaltern zugeordnete Relais deaktiviert wird bzw. abfällt und der Fehlstromschutzschalter abgeschaltet wird. Dabei erfolgt die Selbstüberwachung des Fehlerstromschutzschalters mit einer niedrigen Frequenz, vorzugsweise der Netzfrequenz.

Bei diesem Fehlerstromschutzschalter wird die Überwachung durch den Fehlerstromschutzschalter mit einer niedrigen Frequenz, insbesondere Netzfrequenz vorgenommen, d.h. es besteht zwischen dem ständig fließenden Prüfstrom und eventuell auftretenden Fehlerströmen ein Phasenbezug. Tritt beispielsweise bei einem mehrphasigen Netz zwischen dem Fehlerstrom und dem Prüfstrom ein Phasenbezug von 180° auf, wird das Prüfsignal kompensiert. Dieses Problem tritt generell bei Prüfsignalen mit Netzfrequenz bzw. niedriger Frequenz auf.

Zur Erkennung derartiger glatter Gleichfehlerströme ist aus der Druckschrift "Allstromsensitive Fehlerstromschutzeinrichtung für Industrieanwendung" etz Band 115, 1994, Heft 16 bekannt, bei einem Fehlerstromschutzschalter neben einem konventionellen Wandler zur Erkennung von Differenzfehlerströmen mit Wechselanteil einen zweiten Wandler nach dem Transduktorprinzip für die Erkennung der glatten Gleichfehlerströme vorzusehen. Dies hat jedoch den Nachteil, daß ein derartiger Fehlerstromschutzschalter technisch aufwendig und somit teuer in der Herstellung ist. Darüber hinaus erfolgt bei diesen Fehlerstromschutzschaltern mit zwei Wandlern keine Überwachung dahingehend, ob ein Defekt in einem der beiden Detektorschaltkreise auftritt. Solche Fehlerstromschutzschalter lösen damit selbst bei einem auftretenden Fehlerstrom nicht aus, wenn der entsprechende Detektorschaltkreis defekt ist. Dies stellt ein erhebliches Sicherheitsproblem dar.

Es ist daher die Aufgabe der Erfindung, einen Fehlerstromschutzschalter zu schaffen, der alle Arten von Fehlerströmen unabhängig von ihrer Signalform erkennt und dabei einen einfachen Aufbau aufweist.

Diese Aufgabe wird erfindungsgemäß durch die im kennzeichnenden Teil des Patentanspruchs 1 angegebenen Merkmale gelöst.

Bevorzugte Ausgestaltungen der Erfindung ergeben sich aus den Unteransprüchen.

Ein Vorteil der Erfindung besteht darin, daß die Phasenbezüge zwischen Prüfstrom und Fehlerstrom aufgehoben werden.

Ein weiterer Vorteil der Erfindung besteht darin, daß der Ausfall des Detektorschaltkreises bzw. Schwingkreises zu einer automatischen Abschaltung führt.

Der erfindungsgemäße Fehlerstromschutzschalter erkennt, alle Arten von Fehlerströmen, insbesondere auch Gleichfehlerströme, unter Einsatz eines einzigen Wandlers. Hierbei erfolgt erfindungsgemäß eine permanente Überprüfung der Wandlerfunktion.

Gemäß vorliegender Erfindung ist der Fehlerstromschutzschalter gleichstromsensitiv und schaltet, wahlweise unverzögert, kurzzeitverzögert oder selektiv. Weiterhin wird eine Zwangsabschaltung herbeigeführt, wenn der mit einem Fehlerstrom beaufschlagte Schalter nicht abschaltet bzw. sich öffnet.

Bevorzugte Ausführungsformen der Erfindung werden nachfolgend anhand der Zeichnung zur Erläuterung weiterer Merkmale beschrieben.

Es zeigen:
- Fig. 1: den Aufbau einer ersten Ausführungsform des erfindungsgemäßen Fehlerstromschutzschalters;
- Fig. 2: den Aufbau einer weiteren Ausführungsform des erfindungsgemäßen Fehlerstromschutzschalters mit einer Detaildarstellung der Logikschaltung; und
- Fig. 3: Kennlinien der Schwingkreisinduktivität der Schwingkreisfrequenz sowie der Frequenz/Spannungswandlerausgangsspannung in Abhängigkeit eines Prüfgleichstroms.

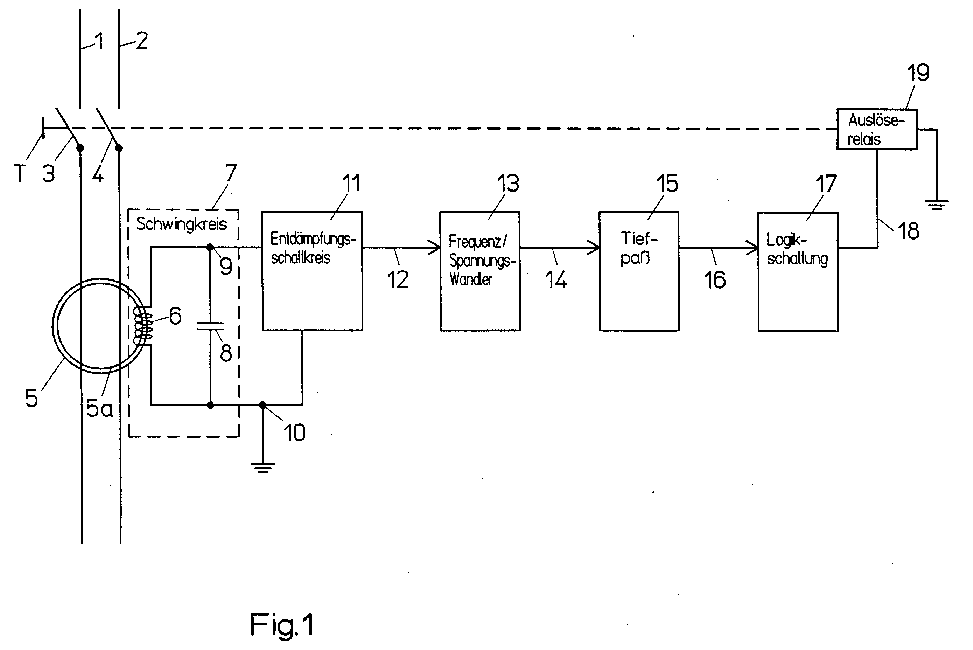

Nachstehend wird zunächst der Aufbau einer bevorzugten Ausführungsform des erfindungsgemäßen Fehlerstromschutzschalters anhand der Fig. 1 beschrieben.

In Stromversorgungsleitungen 1, 2 sind mechanisch gekoppelte Schalter 3, 4 geschaltet, welche durch eine Prüftaste betätigbar sind. Die Stromversorgungsleitungen bzw. Leiter 3, 4 sind durch einen Summenstromwandler 5 hindurch geführt, dessen Primärwicklung durch die Stromversorgungsleitungen 1, 2 gebildet wird und dessen Sekundärwicklung 6 Teil eines Schwingkreises 7 ist. Bei dem Schwingkreis 7 handelt es sich vorzugsweise um einen Parallelschwingkreis mit einem Kondensator 8, der parallel zur Sekundärspule 6 des Summenstromwandlers 5 geschaltet ist.

Bei einer nicht dargestellten weiteren Ausführungsform ist der Schwingkreis 7 ein Reihenschwingkreis, bei dem der Kondensator 8 in Reihe zu der Sekundärspule 6 des Summenstromwandlers 5 geschaltet ist.

Der Schwingkreis 7 weist eine Resonanzfrequenz fᵣ auf, die von der Induktivität L der Sekundärspule 6 und der Kapazität C des Kondensators 8 abhängt. Die Induktivität L der Sekundärspule 6 ist nicht konstant, sondern wird als gesteuerte Induktivität genutzt. Die Erfindung nutzt das Prinzip der gesteuerten Induktivität, das nachfolgend kurz erläutert wird. Ein weichmagnetischer Kern mit runder Hysteresekurve besitzt abhängig von seiner Magnetisierung unterschiedliche Induktivität. Die Induktivität L ist somit abhängig von der Permeabilität µᵣ des mit 5a bezeichneten Kerns des Summenstromwandlers 5 und damit von der Steilheit der Hysteresekurve.

Fährt man die Hysteresekurve des Kerns 5a mit einem variablen Gleichstrom ab, so erhält man Arbeitspunkte mit unterschiedlich steilen Tangenten und entsprechenden Induktivitäten. Die Induktivität L der Sekundärspule 6 hängt von der Permeabilität des Kerns 5a ab und somit von der Höhe der durch die Stromversorgungsleitungen 1, 2 fließenden Fehlerströme. Bei steigenden Fehlerströmen nimmt die magnetische Feldstärke H zu und der Kern 5a des Summenstromwandlers 5 wird magnetisiert. Dabei nimmt die Beweglichkeit der Magnetpartikel im Kern 5a ab und die Permeabilität des Kerns 5a nimmt somit ebenfalls ab. Im Extremfall befindet sich der Kern 5a in Sättigung, bei der eine weitere Drehung der Magnetpartikel nicht mehr möglich ist und die Tangente an der Hysteresekurve wird nahezu horizontal. Dies bedeutet, daß die Induktivität L der Sekundärspule 6, welche direkt proportional zu der Permeabilität µᵣ des Kerns 5a ist, bei zunehmendem Fehlerstrom abnimmt und sich die Resonanzfrequenz fᵣ des Schwingkreises 7 erhöht.

Die Betriebsfrequenz f₀ des Schwingkreises 7 wird wesentlich größer als die Frequenz des auftretenden Fehlerstroms gewählt.

Die Betriebsfrequenz f₀ beträgt beispielsweise einige kHz und weist somit eine wesentlich höherere Frequenz auf als ein Fehlerstrom mit einer Grundfrequenz von 50 Hz. Der Fehlerstrom kann in bezug auf die Betriebsfrequenz f₀ des Schwingkreises 7 als Gleichstrom angesehen werden. Es liegen damit die gleichen Voraussetzungen vor wie bei der obigen Prinzipbetrachtung einer gleichstromgesteuerten Induktivität L.

Der Schwingkreis 7 dient somit als Detektorschaltkreis zur Erfassung der Höhe von Fehlerströmen, die in den Stromversorgungsleitungen 1, 2 auftreten, wobei die zwischen den Knotenpunkten 9, 10 auftretende Ausgangsmeßspannung abhängig von der durch die Induktivitätsänderung hervorgerufenen Verschiebung der Resonanzfrequenzkurve des Resonanzschwingkreises 7 ist.

Der in Fig. 1 dargestellte Parallelschwingkreis 7 ist am Knotenpunkt 10 geerdet.

Der Entdämpfungsschaltkreis 11 ist an den Knotenpunkten 9 und 10 an den Schwingkreis 7 angeschlossen. Der Entdämpfungsschaltkreis 11 dient der elektronischen Entdämpfung des Schwingkreises 7, so daß der Schwingkreis 7 dauerhaft schwingt. Der Entdämpfungsschaltkreis 11 ist derart konstruiert, daß kein Gleichanteil in die Sekundärwicklung 6 des Schwingkreises eingeprägt ist. Die Entdämpfung ist notwendig oder zumindest zweckmäßig, um die in dem Schwingkreis 7 auftretenden Energieverluste kontinuierlich auszugleichen, so daß der Schwingkreis 7 dauerhaft am Schwingen gehalten wird. Der Entdämpfungsschaltkreis 11 stößt den Schwingkreis 7 vorzugsweise mit einem Rechtecksignal pulsartig an, welches die Betriebsfrequenz f₀ aufweist.

In einer nicht dargestellten, bevorzugten Ausführungsform weist der Entdämpfungsschaltkreis 11 ein retriggerbares Monoflop auf. Bei Fehlerströmen mit hoher Amplitude, die einen bestimmten Spitzenwert überschreiten, bricht möglicherweise die Schwingung des Schwingkreises 7 ab und der Schwingkreis 7 schwingt nach Abfallen des Stromes unter Umständen nicht mehr eigenständig an. Das retriggerbare Monoflop regt den Schwingkreis 7 in bestimmten Zeitabständen erneut an, bis der Schwingkreis 7 selbständig schwingt. Das in dem Entdämpfungsschaltkreis 11 enthaltene Monoflop stellt also ein eigenständiges Anschwingen des Schwingkreises 7 nach einem Abbrechen der Schwingung sicher.

An den Ausgang des Entdämpfungsschaltkreises 11 ist über eine Leitung 12 ein Frequenz/Spannungswandler 13 angeschlossen. Der Frequenz/Spannungswandler 13 ist über eine Leitung 14 mit einem Tiefpaß 15 verbunden. Die an der Leitung 14 anliegende Ausgangsspannung des Frequenz/Spannungswandlers 13 ist proportional zu der Frequenz des auf der Leitung 12 auftretenden Meßsignals. Die Steilheit des Frequenz/Spannungswandlers 13 ist bei einer bevorzugten Ausführungsform über einen Widerstand einstellbar.

Das TP-Filter 15 unterdrückt die in dem Ausgangssignal des Frequenz/Spannungswandlers 13 noch schwach enthaltene Schwingkreisfrequenz. Ferner werden Frequenzanteile des Fehlerstromsignals oberhalb 50 Hz gedämpft. Dies wirkt einer erhöhten Empfindlichkeit des Fehlerstromschutzschalters bei phasenangeschnittenen Fehlerströmen entgegen.

Bei einer nicht dargestellten weiteren Ausführungsform der Erfindung ist zwischen den Frequenz/Spannungswandler 13 und den Tiefpaßfilter 15 ein Impedanzwandler geschaltet, welcher den hohen Innenwiderstand der Ausgangsbeschaltung des Frequenz/Spannungswandlers 13 auf einen für das Tiefpaßfilter 15 notwendigen Wert reduziert.

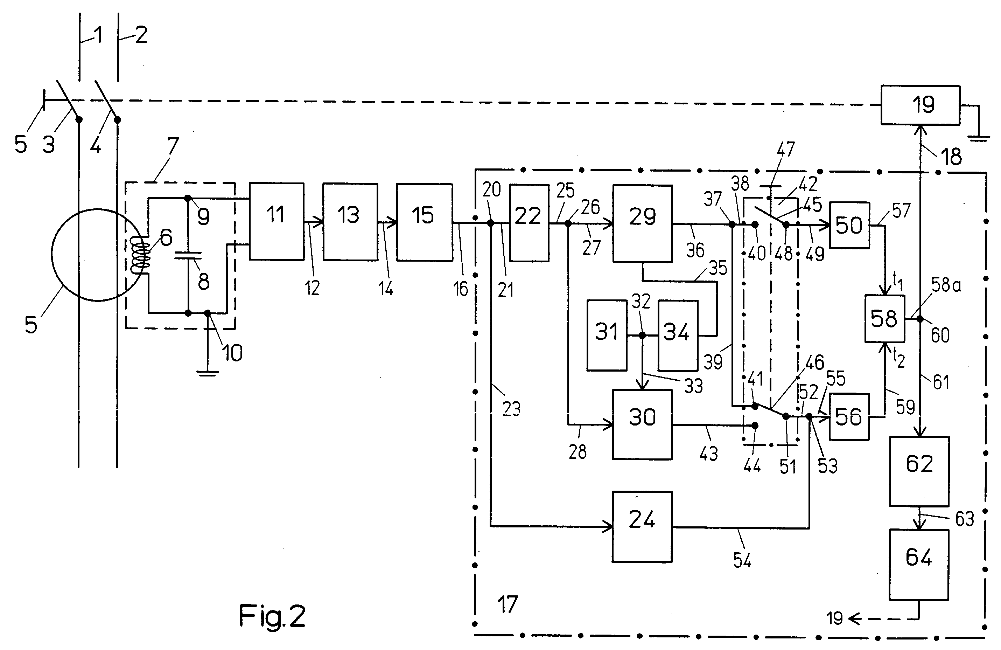

Ausgangsseitig ist das Tiefpaßfilter 15 über eine Leitung 16 mit einer Logikschaltung 17 verbunden. Der Aufbau der Logikschaltung 17 wird genauer im Zusammenhang mit Fig. 2 erläutert. Die Logikschaltung 17 steuert ausgangsseitig über eine Steuerleitung 18 ein Auslöserelais 19. Das Auslöserelais 19 ist mechanisch mit den Schaltkontakten 3, 4 gekoppelt.

Im folgenden wird der Aufbau der Logikschaltung 17 erläutert. Bei einer Ausführungsform der Erfindung besteht die Logikschaltung 17 des Fehlerstromschutzschalters aus einem Fensterkomparator. Der Fensterkomparator 17 prüft, ob die Spannung des an der Ausgangsleitung 16 des Tiefpaßfilters 15 anliegenden Meßsignals in einem gültigen Wertebereich zwischen zwei vorbestimmten Spannungswerten liegt. Steigt die Spannung des am Ausgang des Tiefpaßfilters 15 anliegenden Meßsignals durch einen auf den Stromversorgungsleitungen 1, 2 auftretenden Fehlerstrom unzulässig an, so gibt der Fensterkomparator 17 über die Steuerleitung 18 ein Steuersignal an das Auslöserelais 19 ab, welches beide Schaltkontakte 3, 4 öffnet. Sinkt die Spannung am Ausgang des Tiefpaßfilters 15 unter einen bestimmten Spannungswert ab, beispielsweise wenn die Schwingung im Schwingkreis 7 durch Beschädigung des Schwingkreises oder durch Verstimmung des Schwingkreises abbricht, so gibt der Fensterkomparator ebenfalls ein Steuersignal über die Steuerleitung 18 zu dem Auslöserelais 19 zur Öffnung der Schalter 3, 4 ab.

Bei einer weiteren bevorzugten Ausführungsform der Erfindung besteht die Logikschaltung 17 nicht aus einem Fensterkomparator, sondern aus einer Schaltung, wie sie nachfolgend unter Bezugnahme auf die Fig. 2 erläutert ist.

Die Logikschaltung 17 ist eingangsseitig über die Leitung 16 mit dem Tiefpaßfilter 15 verbunden. Die Leitung 16 verzweigt sich gemäß Figur 2 am Knotenpunkt 20 in eine Leitung 21, welche zu einer Signalkalibrierschaltung 22 führt, und in eine Leitung 23, welche den Knotenpunkt 20 mit einem Komparator 24 verbindet. Die Signalkalibrierschaltung 22 ist ausgangsseitig über eine Leitung 25 an einen Knotenpunkt 26 geschaltet, an welchem sich die Leitung 25 in eine Leitung 27 und in eine Leitung 28 verzweigt. Die Leitung 27 ist auf den Komparator 29 geführt, und die Leitung 28 auf einen Komparator 30. Eine Temperaturkompensationsschaltung 31 ist über einen Verzweigungspunkt 32 und über eine Leitung 33 direkt mit dem Komparator 30 und ferner über einen Spannungsteiler 34 und eine Leitung 35 mit dem Komparator 29 verbunden. Der Komparator 29 weist eine Ausgangsleitung 36 auf, welche sich an einem Verzweigungspunkt 37 in eine Leitung 38 und in eine Leitung 39 verzweigt. Die Leitung 38 führt zu einem ersten Schaltkontaktpunkt 40, und die zweite Leitung 39 zu einem zweiten Schaltkontaktpunkt 41 eines Doppelschalters 42. Der Komparator 30 weist eine Ausgangsleitung 43 auf, welche zu einem Schaltkontaktpunkt 44 des Doppelschalters 42 führt. Der Doppelschalter 42 besteht aus einem ersten Schalter 45 und einem zweiten Schalter 46, welche mechanisch gekoppelt sind und gemeinsam über eine Taste bzw. einen Hebel 47 des Doppelschalters 42 betätigbar sind. Der erste Schalter 45 weist neben dem Schaltkontaktpunkt 40 ausgangsseitig einen zweiten Schaltkontaktpunkt 48 auf, an welchen über eine Leitung 49 ein erstes Monoflop 50 angeschlossen ist. Der zweite Schalter 46 des Doppelschalters 42 weist neben den Schaltkontakten 41, 44 ausgangsseitig einen Schaltkontakt 51 auf. Ausgangsseitig ist der Schaltkontakt 51 des Schalters 46 über eine Leitung 52 an einen Knotenpunkt 53 angeschlossen. Der Knotenpunkt 53 ist über eine Leitung 54 an den Ausgang des Komparators 24 angeschlossen. Ferner führt eine Leitung 55 von dem Knotenpunkt 53 zu einem zweiten Monoflop 56.

Der Doppelschalter 42, welcher aus den beiden Schaltern 45, 46 besteht, weist zwei Schaltstellungen auf. In der ersten Schaltstellung ist der Schalter 45 geöffnet, wobei die Schaltkontakte 40 und 48 nicht verbunden sind, und der Schalter 46 verbindet die Schaltkontakte 41 und 51. In einer zweiten Schaltstellung ist der Schalter 45 geschlossen, wobei die Schaltkontakte 40 und 48 geschlossen sind, und der Schalter 46 verbindet die Schaltkontakte 44 und 51. Das erste Monoflop 50 ist ausgangsseitig über eine Leitung 57 an eine Verzögerungsschaltung 58 angeschlossen. Das zweite Monoflop 56 ist ebenfalls über eine Ausgangsleitung 59 an die Verzögerungsschaltung 58 angeschlossen. Die Verzögerungsschaltung 58 weist ausgangsseitig eine Ausgangsleitung 58a auf, welche zu einem Verzweigungspunkt 60 führt. Der Verzweigungspunkt 60 ist über die Steuerleitung 18 mit dem Auslöserelais 19 des Fehlerstromschutzschalters verbunden. Durch das Auslöserelais 19 sind die Schalter 3, 4 in den Stromversorgungsleitungen 1, 2 betätigbar. Der Verzweigungspunkt 60 ist über eine Leitung 61 mit einer zweiten Verzögerungsschaltung 62 verbunden. Die Verzögerungsschaltung 62 steuert über eine zweite Steuerleitung 63 einen Zwangsauslösemechanismus 64.

Nachfolgend wird die Funktionsweise der Logikschaltung 17 unter Bezugnahme auf die Fig. 2 erläutert. Durch den Doppelschalter 42, welcher durch eine Taste 47 bzw. einen Hebel betätigbar ist, kann zwischen zwei Betriebsarten, nämlich zwischen einem selektiven und einem nicht verzögerten oder kurzzeitverzögerten Modus geschaltet werden.

Ist der Doppelschalter 42 bestehend aus den Schaltern 45 und 46, so geschaltet, daß der Schalter 45 geschlossen ist und die Schaltkontakte 40 und 48 miteinander verbindet und der Schalter 46 die Schaltkontakte 44 und 51 verbindet, befindet sich die Logikschaltung 17 im selektiven Betriebsmodus. In dieser Betriebsart bleibt der Fehlerstromschutzschalter bei kleinen Fehlerströmen bestimmter Höhe mindestens eine bestimmte Zeitdauer "immun", d.h. er löst nicht sofort aus, sondern löst erst bei hohen Fehlerströmen bestimmter Höhe spätestens nach einer bestimmten Zeitdauer aus. In der beschriebenen Schaltstellung des Doppelschalters 42 ist der Ausgang des Komparators 29 über die Leitung 36, den Verzweigungspunkt 37, die Leitung 38, den Schaltkontakt 40, den Schalter 45, den Schaltkontakt 48 sowie die Leitung 49 mit dem Monoflop 50 verbunden. Ferner ist in dieser Schaltstellung der Komparator 30 über die Leitung 43, den Schaltkontakt 44, den Schalter 46, den Schaltkontakt 51, die Leitung 52, den Knotenpunkt 53 sowie die Leitung 55 mit dem Monoflop 56 verbunden.

Die Signalkalibrierschaltung 22, welche das Ausgangssignal des Tiefpaßfilters 15 über die Leitung 21 empfängt, bereitet das Fehlerstromsignal derart auf, daß der Komparator 29 bei einer bestimmten Fehlerstromhöhe auslöst. Der Komparator 29 ist über die Leitung 25 und 26 mit der Signalkalibrierschaltung 22 verbunden. Die Auslöseschwelle des Komparators 30 liegt um ein bestimmtes Vielfaches höher als die Auslöseschwelle des Komparators 29, beispielsweise ist sie dreimal so hoch. Die Auslöseschwellen der beiden Komparatoren 29, 30 werden durch die Temperaturkompensationsschaltung 31 mit dem nachgeschalteten Spannungsteiler 34 in Abhängigkeit von der Wandlertemperatur im gleichen Verhältnis zueinander angepaßt. Die höhere Empfindlichkeit des Wandlers bei hohen Temperaturen wird durch die gleichzeitige Erhöhung der Ansprechschwellen näherungsweise kompensiert. Am Verzweigungspunkt 20 liegt bedingt durch die Nennfrequenz des Schwingkreises 7, d.h. der Resonanzfrequenz fᵣ ohne aufgetretenen Fehlerstrom, ein Gleichspannungsanteil an, der im normalen Betrieb nicht unterschritten wird. Tritt ein Defekt in der Fehlerstromerfassung auf, reduziert sich dieser Gleichspannungswert am Verzweigungspunkt 20 erheblich. Dies wird durch den Komparator 24, welcher über die Leitung 23 mit dem Verzweigungspunkt 20 verbunden ist, detektiert, wobei der Komparator 24 über die Leitung 54 das Monoflop 56 schaltet.

Im selektiven Betriebsmodus ist der Doppelschalter 42 derart geschaltet, daß der Schalter 45 geschlossen ist, d.h. die Schaltkontakte 40 und 48 verbunden sind, und der Schalter 46 die Schaltkontakte 44 und 51 verbindet. In dieser Schaltstellung triggert der Komparator 29 das Monoflop 50 bei Fehlerströmen, die oberhalb der Ansprechschwelle des Komparators 29 liegen. Die Pulsbreite des Ausgangssignales des Komparators 29 ist abhängig von der Höhe des Fehlerstromes. Das Monoflop 50 unterdrückt diese Abhängigkeit des Komparatorausgangssignales, da es nur einen ersten stabilen Zustand besitzt, wobei ein zweiter Zustand des Monoflops 50 nur für eine vorbestimmte Zeitperiode stabil ist. Das Monoflop 50 steuert über die Leitung 57 die Verzögerungsschaltung 58, die bei einem dauerhaften hochpegeligen Ausgangssignal des Monoflops 50 nach einer bestimmten Verzögerungszeitdauer t₁ ausgangsseitig an der Leitung 58a ebenfalls einen hochpegeligen Zustand annimmt. Dieses hochpegelige Ausgangssignal der Verzögerungsschaltung 58 liegt über die Leitung 58a und den Verzweigungspunkt 60 an der Steuerleitung 18 der Logikschaltung 17 an und steuert das Auslöserelais 19 des Fehlerstromschutzschalters derart, daß über die mechanische Kopplung die Schalter 3, 4 geöffnet und somit die Stromversorgungsleitungen 1, 2 unterbrochen werden.

Im selektiven Betriebsmodus ist der Komparator 30 über den Schalter 46 des Doppelschalters 42 mit dem Monoflop 56 verbunden. Überschreitet der Fehlerstrom an der Ausgangsseite der Signalkalibrierungsschaltung 22 die Auslöseschwelle des Komparators 30, welche um ein Vielfaches höher ist als die Auslöseschwelle des Komparators 29, wird das an der Leitung 43 anliegende Ausgangssignal des Komparators 30 hochpegelig und triggert über den Schalter 46 sowie die Leitungen 51 und 55 das Monoflop 56. Das Monoflop 56 schaltet über die Leitung 59 die Verzögerungsschaltung 58. Empfängt die Verzögerungsschaltung 58 über die Leitung 59 ein hochpegeliges Ausgangssignal, reduziert sich die Verzögerungszeit der Schaltung 58 auf eine bestimmte zweite Verzögerungsdauer t₂, welche geringer ist als die erste Verzögerungsdauer t₁. An der Steuerleitung 18 der Logikschaltung 17 liegt daher bereits nach einer kürzeren Verzögerungszeit t₂ ein hochpegeliges Steuersignal an, welches über das Auslöserelais 19 des Fehlerstromschutzschalters die Schalter 3, 4 der Stromversorgungsleitungen 1, 2 öffnet. Dies bedeutet, daß die Logikschaltung 17 im selektiven Betriebsmodus bei Fehlerströmen, die unterhalb der Ansprechschwelle des Komparators 29 liegen, die Schalter 3, 4 erst nach einer vorbestimmten längeren Verzögerungszeit t₁ öffnet, und bei Fehlerströmen, die oberhalb der Ansprechschwelle des Komparators 30 liegen, die Schalter 3, 4 bereits nach einer kürzeren zweiten Verzögerungszeit t₂ öffnet.

Im kurzzeit- bzw. unverzögerten Betriebsmodus befindet sich der Doppelschalter 42 in der anderen Schaltstellung, d.h. der Schalter 45 ist geöffnet und der Schalter 46 verbindet die Schaltkontakte 41 und 51. In dieser Schaltstellung ist das Monoflop 50 vom Komparator 29 getrennt und besitzt in dieser Betriebsart keine Funktion. Das Monoflop 56 wird bei Fehlerströmen, welche über der niedrigen Ansprechschwelle des Komparators 29 liegen, über die Leitung 39, den Schalter 46 sowie die Leitungen 52 und 55 getriggert, oder wenn ein Defekt in der Fehlerstromerfassung auftritt, über das Monoflop 24 über die Leitungen 54 und 53 getriggert. Das Monoflop 56 gibt ein hochpegeliges Ausgangssignal bei erfolgter Triggerung über die Ausgangsleitung 59 an die Verzögerungsschaltung 58 ab, welche nach der bestimmten zweiten geringeren Verzögerungszeit t₂ ein Steuersignal über die Leitung 58a und die Steuerleitung 18 an das Auslöserelais zum Öffnen der Schaltkontakte 3, 4 anlegt.

In einer bevorzugten Ausführungsform der Logikschaltung 17 sind die Verzögerungszeitdauern der Verzögerungsschaltung 58 über einen Kondensator einstellbar.

In einer weiteren Ausführungsform des erfindungsgemäßen Fehlerstromschutzschalters kann neben der Öffnung der Schalter 3, 4 ein zweiter Zwangsauslösemechanismus vorgesehen sein. Dieser Zwangsauslösemechanismus dient zur zwangsweisen Öffnung der Schalter 3, 4, wenn nach einer vorbestimmten längeren Zeitdauer nach Aktivierung des Auslöserelais 19 immer noch ein erheblicher Fehlerstrom erfaßt wird. Ein solcher Fehlerfall kann beispielsweise dann auftreten, wenn die Schalter 3, 4 verklebt und durch das Auslöserelais 19 nicht zu öffnen sind. In dieser Ausführungsform des Fehlerstromschutzschalters besitzt die Logikschaltung 17 zusätzlich eine zweite Verzögerungsschaltung 62, welche über eine Leitung 61 an den Verzweigungspunkt 60 angeschlossen ist. Werden die Schalter 3, 4 bei Auftreten eines Fehlerstroms nach einer bestimmten Zeitdauer nicht geöffnet, legt die Verzögerungsschaltung 62 ein Steuersignal über die Leitung 63 an den Zwangsauslösemechanismus 64 an, der die Schalter 3, 4 dann zwangsweise öffnet. Die Verzögerungsschaltung 62 ist vorzugsweise ebenfalls über einen Kondensator einstellbar.

Über die Logikschaltung 17, welche durch den Doppelschalter 42 betätigbar ist, kann also wahlweise eingestellt werden, ob die Abschaltung durch das Auslöserelais 19 unmittelbar, kurzzeitverzögert oder selektiv erfolgt. Die Abschaltzeit ist beim kurzzeitverzögerten Betriebsmodus im Gegensatz zum selektiven Modus unabhängig von der Höhe des Fehlerstromes.

Die Temperaturkompensationsschaltung 31 der Logikschaltung 17 hat folgenden Zweck: Da der Summenstromwandler 5 bei steigender Temperatur immer leichter aufmagnetisierbar ist, würden die Auslösewerte immer niedriger. Die Temperaturkompensationsschaltung 31 führt daher die Auslöseschwellen der Komparatoren 29 und 30 entsprechend nach, so daß die Auslösewerte für die Fehlerströme konstanter gehalten werden. Da die Temperatureinflüsse je nach Material des Wandlerkerns 8 stark differieren, ist die Temperaturkompensationsschaltung 31 vorzugsweise einstellbar, beispielsweise über ein Potentiometer.

Nachfolgend wird die Funktionsweise des erfindungsgemäßen Fehlerstromschutzschalters beschrieben. Tritt in den Stromversorgungsleitungen 1, 2 bei geschlossenen Schaltern 3, 4 ein Fehlerstrom auf, werden diese im Summenstromwandler 5, dessen Primärwicklung durch die Stromversorgungsleitungen 1, 2 gebildet sind, erfaßt und dadurch die Magnetisierung im Ringkern 5a verändert. Entsprechend ändert sich die Induktivität L der Sekundärspule 6 des Summenstromwandlers 5, und die Schwingkreisfrequenz steigt an.

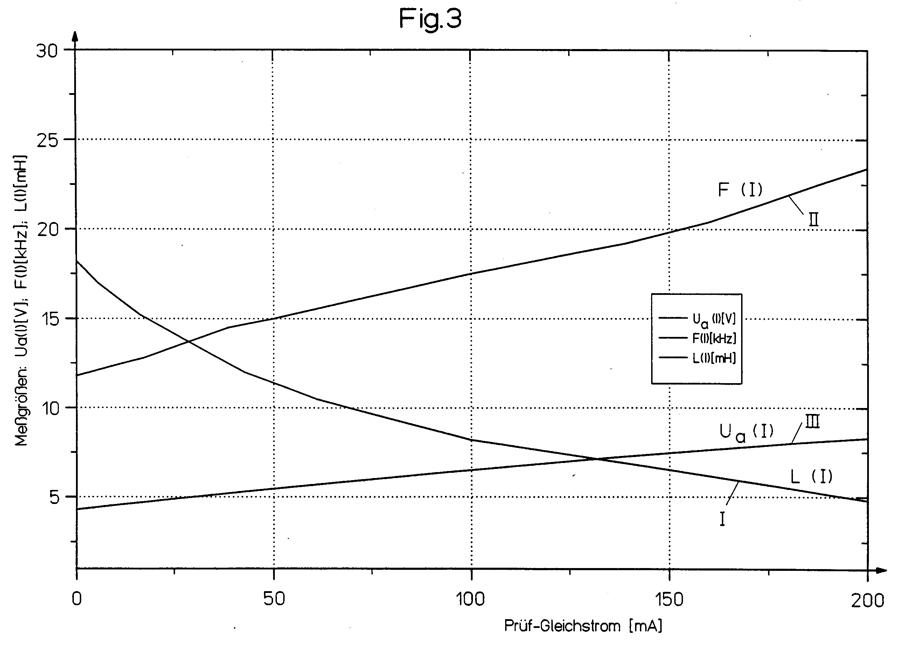

Nachfolgend wird auf Figur 3 Bezug genommen. In Fig. 3 ist die Abhängigkeit der Induktivität L und der Schwingkreisfrequenz von einem Prüfgleichstrom, der über die Stromversorgungsleitungen 1, 2 geleitet wird, dargestellt. Wie aus der Kurve I hervorgeht, welche die Induktivität L in Abhängigkeit vom Prüfgleichstrom zeigt, sinkt die Induktivität der Sekundärspule 6 mit steigendem Prüfgleichstrom ab. Dementsprechend steigt die Schwingkreisfrequenz f (Kurve II), welche von der Induktivität L der Sekundärspule 6 und der Kapazität C des Kondensators 8 abhängt, entsprechend der Verringerung der Induktivität L an. Das Meßsignal wird über den Entdämpfungsschaltkreis 11 und die Leitung 12 dem Frequenz/Spannungswandler 13 zugeführt. Dieser Frequenz/Spannungswandler 13 gibt an seinem Ausgang über die Leitung 14 eine Spannung ab, welche proportional zur Frequenz des Meßsignals am Eingang des Frequenz/Spannungswandlers ist.

Die Kurve III in Fig. 3 zeigt die Ausgangsspannung des Frequenz/Spannungswandlers 13 in Abhängigkeit vom Prüfgleichstrom, welcher über die Versorgungsleitungen 1, 2 geleitet wird. Wie aus Fig. 3 zu erkennen ist, steigt die Ausgangsspannung des Frequenz/Spannungswandlers 13 mit ansteigendem Prüfgleichstrom entsprechend der Frequenz des Schwingkreises 7 (Kurve II in Fig. 3) an. Das Ausgangsspannungssignal des Frequenz/Spannnungswandlers 13 wird über die Leitung 14 an das Tiefpaßfilter 15 angelegt, welches die in dem Ausgangsspannungssignal noch schwach enthaltene Schwingkreisfrequenz unterdrückt. Das Ausgangssignal des Tiefpaßfilters 15 wird über die Leitung 16 der Logikschaltung 17 zugeführt. Die Logikschaltung 17 besteht in einer einfachen Ausführungsform aus einem Fensterkomparator, welcher überprüft, ob die Eingangsspannung auf der Leitung 16 in einem gültigen Wertebereich zwischen zwei vorbestimmten Spannungswerten liegt. Steigt das Ausgangsspannungssignal des Tiefpaßfilters 15 aufgrund eines Fehlerstroms über einen bestimmten Grenzwert an, so veranlaßt die Logikschaltung 17 das Auslöserelais 19 dazu, die Schalter 3, 4 zu öffnen. Sinkt das Ausgangsspannungssignal des Tiefpaßfilters 15 auf der Leitung 16 unterhalb einen bestimmten Wert, so erkennt die Logikschaltung 17, daß die Schwingung im Detektorschwingkreis 7 durch Beschädigung abgerissen ist oder sich der Schwingkreis 7 verstimmt hat. In diesem Fall erkennt die Logikschaltung 17 des Fehlerstromschutzschalters, daß der Detektorschaltkreis des Fehlerstromschutzschalters defekt ist und gibt ebenfalls ein Steuersignal über die Steuerleitung 18 an das Auslöserelais 19 ab zur Öffnung der Schalter 3, 4.

Bei einer weiteren Ausführungsform der Erfindung besteht die Logikschaltung nicht aus einem einfachen Fensterkomparator, sondern weist einen Doppelschalter 42 auf, durch den verschiedene Betriebsarten einstellbar sind. Dabei kann durch eine Person eingestellt werden, ob die Abschaltung unmittelbar, kurzzeitverzögert oder selektiv erfolgen soll. Die Abschaltzeit ist beim kurzzeitverzögerten Betrieb im Gegensatz zum selektiven Modus nicht von der Höhe des Fehlerstromes abhängig, sondern stets kurz. Ferner ist bei einer weiteren Ausführungsform zusätzlich ein Zwangsabschaltmechanismus 64 vorgesehen, der ebenfalls über die Logikschaltung 17 angesteuert wird.

Der erfindungsgemäße Fehlerstromschutzschalter ist fail-safetauglich, da er sich selbst überwacht und erkennt, wenn beispielsweise der Detektorschaltkreis zum Erfassen der Fehlerströme defekt ist. Die auf den Stromversorgungsleitungen 1, 2 auftretenden Fehlerströme werden durch den erfindungsgemäßen Fehlerstromschutzschalter unabhängig von ihrer Signalform erkannt und ausgewertet. Insbesondere werden auch Gleichfehlerströme durch den Fehlerstromschutzschalter erkannt. Da die Betriebsfrequenz des Schwingkreises 7 erheblich höher liegt als die Netzfrequenz, sind die Phasenbezüge zwischen der Betriebsfrequenz und der Netzfrequenz gelöst. Probleme, die durch Phasenbeziehungen zwischen der Betriebsfrequenz und der Netzfrequenz entstehen können, werden vermieden.

## Patentansprüche

1. Fehlerstromschutzschalter mit einem Summenstromwandler zur Erfassung von Fehlerströmen auf Stromversorgungsleitungen (L, N), mit
einem Auslöserelais, durch welches in den Stromversorgungsleitungen (L, N) geschaltete Schalter betätigbar sind,
gekennzeichnet durch
einen Schwingkreis (7), der die Sekundärspule (6) des Summenstromwandlers (5) enthält,
einen Entdämpfungsschaltkreis (11) zur Entdämpfung des Schwingkreises (7) und zur Abgabe eines Meßsignals,
einen Frequenz/Spannungswandler (13) zur Umwandlung des Meßsignals in einen Spannungswert,
und durch
eine Logikschaltung (17) zur Ansteuerung des Auslöserelais (19).

2. Fehlerstromschutzschalter nach Anspruch 1,
**dadurch gekennzeichnet**,
daß zwischen den Frequenz/Spannungswandler (13) und die Logikschaltung (17) ein Tiefpaßfilter (15) geschaltet ist.

3. Fehlerstromschutzschalter nach einem der vorangehenden Ansprüche,
**dadurch gekennzeichnet**,
daß zwischen dem Frequenz/Spannungswandler (13) und dem Tiefpaßfilter (15) ein Impendanzwandler vorgesehen ist.

4. Fehlerstromschutzschalter nach einem der vorangehenden Ansprüche,
**dadurch gekennzeichnet**,
daß der Schwingkreis (7) aus der Sekundärspule (6) des Summenstromwandlers (5) sowie einem dazu parallel oder in Reihe geschalteten Kondensator (8) besteht.

5. Fehlerstromschutzschalter nach einem der vorangehenden Ansprüche,
**dadurch gekennzeichnet**,
daß die Logikschaltung (17) eine Temperaturkompensationsschaltung (31) enthält.

6. Fehlerstromschutzschalter nach einem der vorangehenden Ansprüche,
**dadurch gekennzeichnet**,
daß die Logikschaltung (17) ein Fensterkomparator ist.

7. Fehlerstromschutzschalter nach einem der vorangehenden Ansprüche,
**dadurch gekennzeichnet**,
daß die Logikschaltung einen Schalter (42) zum Einstellen eines selektiven oder kurzzeitverzögerten Betriebsmodus aufweist.

8. Fehlerstromschutzschalter nach einem der vorangehenden Ansprüche,
**dadurch gekennzeichnet**,
daß ein Zwangsauslösemechanismus (64) vorgesehen ist.

9. Fehlerstromschutzschalter nach einem der vorangehenden Ansprüche,
**dadurch gekennzeichnet**,
daß die Logikschaltung (17) eine Zeitverzögerungsschaltung (62) zur Aktivierung des Zwangsauslösemechanismus (64) enthält.

10. Fehlerstromschutzschalter nach einem der vorangehenden Ansprüche,
**dadurch gekennzeichnet**,
daß das Auslöserelais (19) ein Ruhestromauslöserelais ist.

11. Fehlerstromschutzschalter nach einem der Ansprüche 1 bis 9,
**dadurch gekennzeichnet**,
daß das Auslöserelais (19) ein Arbeitsstromauslöserelais ist.

12. Fehlerstromschutzschalter nach wenigstens einem der vorangehenden Ansprüche,
**dadurch gekennzeichnet**,
daß der Entdämpfungsschaltkreis (11) ein retriggerbares Monoflop enthält.
